# EUROPÄISCHE PATENTANMELDUNG

(11) **EP 1 995 038 A1**
(43) Veröffentlichungstag der Anmeldung: **26.11.2008**
(21) Anmeldenummer: 07010146.4
(22) Anmeldetag: 22.05.2007
(51) Int. Cl.: B29C 49/56

(54) **Spritzblasvorrichtung**

(71) Anmelder: TecPET innovation GmbH, 93057 Regensburg (DE)
(72) Erfinder: Appel, Otto, Dr.-Ing., 93138 Lappersdorf (DE)
(74) Vertreter: Samson & Partner

(57) **Zusammenfassung**

Die Erfindung betrifft eine Spritzblasvorrichtung zum Blasen von Hohlkörpern aus Vorformlingen mit einer Spritzblaseinheit (1), die folgendes umfasst: ein Gestell (3), eine Form (9), die zwischen einer Verriegelungs- und einer Öffnungsstellung verstellbare Formhälften (5) umfasst, einen Verstellmechanismus (21, 23) zum Verstellen der Formhälften (5) zwischen der Verriegelungs- und der Öffnungsstellung, und eine Verriegelungseinrichtung (19) zum Verriegeln der Formhälften (5) in ihrer Verriegelungsstellung. Die Verriegelungseinrichtung (19) ist ein Abschnitt des Gestells (3), der derart ausgebildet ist, dass er die von den beiden Formhälften (5) in ihrer Verriegelungsstellung beim Blasen ausgeübten Kräfte direkt aufnimmt.

## Beschreibung

Die Erfindung betrifft eine Spritzblasvorrichtung zum Blasen von Hohlkörpern aus Vorformlingen mit einer Spritzblaseinheit, die folgendes umfasst: ein Gestell, eine Form, die zwischen einer Verriegelungs- und einer Öffnungsstellung verstellbare Formhälften umfasst, einen Verstellmechanismus zum Verstellen der Formhälften zwischen der Verriegelungs- und der Öffnungsstellung, und eine Verriegelungseinrichtung zum Verriegeln der Formhälften in Ihrer Verriegelungsstellung.

Eine solche Spritzblasvorrichtung ist aus der DE 10 027 111 B4 bekannt, hier verriegelt eine auf zwei Formhälften aufschiebbare Schließklammer die Form nach Art eines Spangenverschluss.

Bei der US 3,685,943 werden die zwei jeweils an einem beweglichen Arm angeordneten Formhälften beim Schließen teilweise in eine am Maschinengestell angeordnete Klammer eingeführt und von zwei Schließelementen in dieser Stellung gehalten. Bei der EP 1 216 136 B1 drückt ein beweglicher Schieber mittels eines Klemmmechanismus die Formhälften in Schließstellung, wobei die beiden Formhälften über mehrere Gelenkstücke mit dem Schieber verbunden sind. Bei der EP 1 226 017 B1 werden die beiden Formhälften mit einem durch Ösen geführten Stift verriegelt. Eine solche Verriegelung offenbart auch die WO 2006 010 706 A1, bei der zusätzlich der Boden der Form mit einem Kolben längsbeweglich geführt wird und federbelastet in eine Schließposition vorgespannt ist. Beim Umlauf des Blasrades über eine Steuerkurve senkt sich der Kolben gegen den Federdruck und fährt beim weiteren Umlauf in Abhängigkeit vom Kurvenverlauf wieder in seine Schließposition zurück. Die DE 29 913 182 U1 offenbart ebenfalls einen kurvengesteuerten Verriegelungsmechanismus, bei dem eine Verriegelungsstange mittels einer an ihrem unteren Ende drehbar gelagerten Kurvenrolle und zweier Kurvenstücke angehoben und abgesenkt wird.

Bekannte Spritzblasvorrichtungen haben den Nachteil, dass deren Verriegelungselemente einen hohen Platzbedarf haben durch Verund Entriegelungssysteme und mechanisch aufwendig sind und die Formhälften während des Blasprozesses durch separate Druckluftsysteme spielfrei aufeinander hält.

Der Erfindung liegt daher die Aufgabe zugrunde, den Platzbedarf von Spritzblasvorrichtungen zu verringern.

Diese Aufgabe löst der Gegenstand des Anspruchs 1. Danach ist bei einer erfindungsgemäßen Spritzblasvorrichtung die Verriegelungseinrichtung ein Abschnitt des Gestells, der derart ausgebildet ist, dass er die von den beiden Formhälften in ihrer Verriegelungsstellung beim Blasen ausgeübten Kräfte direkt aufnimmt. Eine solche Spritzblasvorrichtung ist besonders kompakt und platzsparend, da zusätzliche Verriegelungseinrichtungen, wie Spangen und dgl. entfallen. Vorteilhaft kann auch auf ein zusätzliches pneumatisches Zuhaltesystem verzichtet werden. Im Vergleich zu herkömmlichen Spritzblasvorrichtungen lässt sich die Größe beispielsweise um bis das 5-fache reduzieren.

Die erfindungsgemäße Spritzblasvorrichtung ist bevorzugt zum Formen von kleinen Behältern ausgestaltet, beispielsweise Flaschen mit einem Füllvolumen von 0,02 1 bis zu 0,25 1. Solche Behältergrößen finden immer stärker Verwendung im Kosmetik- und Pharmabereich, insbesondere auch aufgrund der neuen Bestimmungen zur Mitnahme von Kosmetika, Getränken etc. in Flugzeugen. Auf Grund der geringen auszublasenden Füllvolumen solcher kleinvolumiger Behälter kann eine erfindungsgemäße Spritzblasvorrichtung im Vergleich zu herkömmlichen Spritzblasvorrichtungen mit einem geringen Blasdruck, beispielsweise 5 bis 25 bar, arbeiten.

Bevorzugt sind bei der Spritzblasvorrichtung die beiden Formhälften schwenkbar miteinander verbunden, und der Verstellmechanismus bewirkt eine Schwenkung der Formhälften zwischen deren Verriegelungs- und deren Öffnungsstellung bewirkt. Alternativ könnten sie auch so miteinander gekoppelt sein, dass sie in der Öffnungsstellung vollständig voneinander getrennt sind, wobei der Verstellmechanismus die Formhälften auf eine andere Weise als eine Schwenkung, z.B. über eine Verschiebebewegung zueinander, schließt und öffnet.

Bevorzugt fährt der Verstellmechanismus die beiden Formhälften beim Verstellen in deren Verriegelungsstellung in den Abschnitt des Gestells ein und beim Verstellen in deren Öffnungsstellung aus dem Abschnitt des Gestells aus. Alternativ kann der Schließvorgang der Formhälften auch vom Einfahrvorgang in das Gestell entkoppelt sein.

Bevorzugt umfasst der Verstellmechanismus eine Kulissenführung, die das Ein- und Ausfahren der Formhälften mit deren Ein- und Ausschwenken koppelt. Alternativ kann auch ein anderer dem Durchschnittsfachmann bekannter Kopplungsmechanismus zum Koppeln der beiden Bewegungsvorgänge verwendet werden. Dabei ist der Verriegelungsabschnitt des Gestells der Verriegelungseinrichtung bevorzugt als Kräfteparallelogramm ausgebildet, kann alternativ aber auch als Kräftedreieck oder auch Kräftevieleck ausgebildet sein. Ein Kräfteparallelogramm stellt jedoch auf besonders materialsparende Weise die Verriegelung der Formhälften sicher. Im Prinzip können die Formhälften direkt am Gestell anliegen. Zur Minderung der Gleitreibung beim Einfahren der Formhälften in den Abschnitt des Gestells sind an den Formhälften und/oder dem Abschnitt Gleitmittel, bevorzugt Rollen, angebracht.

Die meisten zu formenden Hohlkörper machen den Einsatz einer zumindest dreiteiligen Form erforderlich, so dass die Form bevorzugt ferner einen zwischen einer Verriegelungs- und einer Öffnungsstellung verstellbaren Formboden umfasst. Dieser fährt bevorzugt mit den beiden Formhälften beim Verstellen in dessen Verriegelungsstellung in den Abschnitt des Gestells ein und beim Verstellen in dessen Öffnungsstellung aus dem Abschnitt des Gestells aus, um die Zykluszeit der Spritzblasvorrichtung zu verkürzen. Wo dies keine Rolle spielt, können die Bewegungen der Formhälften von den Bewegungen des Formbodens entkoppelt sein, und beispielsweise nacheinander erfolgen. Dies ist möglich, da keine Verkrallung der Bodenform in den Formhälften erforderlich ist. Auch kann ein nicht mit den Formhälften gekoppelter, unabhängiger Formboden beispielsweise weiter als die Formhälften aus dem Gestell heraus gefahren werden, um z.B. die Entnahme von fertigen Hohlkörpern zu erleichtern.

Bevorzugt koppelt der Verstellmechanismus die beiden Formhälften und den Formboden über eine verlängerte Verbindungswelle miteinander, die weiter bevorzugt auch die Schwenkachse der beiden Formhälften bildet, was den Platzbedarf der gesamten Vorrichtung weiter reduziert. Es können auch alternative Kopplungen vorgesehen werden. Der Verstellmechanismus umfasst bevorzugt eine mit dem Gestell verbundene Rampe zum Führen des Formbodens von dessen Öffnungsin dessen Verriegelungsstellung, und die Verriegelungseinrichtung einen in der Rampe ausgebildeten Verriegelungsabschnitt. Alternativ ist aber auch eine andere dem Fachmann geläufige Verriegelung des Formbodens möglich.

Die Spritzblasvorrichtung ist bevorzugt mit einer oder mehreren auf einem Blasrad angeordneten Spritzblaseinheiten ausgeführt, die besonders bevorzugt an der Peripherie des Blasrades angeordnet sind, um so eine hohe Produktionsleistung zu erreichen.

Ausführungsbeispiele der vorliegenden Erfindung werden nachfolgend anhand der Zeichnungen beschrieben. Dabei zeigt:
- Fig. 1: eine perspektivische Darstellung einer erfindungsgemäßen Spritzblaseinheit mit geschlossenen Formhälften in einer Ansicht schräg von vorne rechts;
- Fig. 2: eine Querschnittansicht der Spritzblaseinheit aus Fig. 1;
- Fig. 3: eine Ansicht der Spritzblaseinheit aus Fig. 1 von vorne;
- Fig. 4: eine Seitenansicht der Spritzblaseinheit aus Fig. 1;
- Fig. 5: eine perspektivische Darstellung mehrerer auf einem Blasrad angeordneter Spritzblaseinheiten in Verriegelungsstellung in einer Ansicht schräg von vorne rechts; und

In der Folge verwendete Lagebezeichnungen, wie oben, unten, vorne, hinten, rechts und links beziehen sich aus der Sicht eines Betrachters auf eine ihm gegenüber angeordnete Spritzblaseinheit. Spritzblasen im Sinne der nachfolgenden Beschreibung umfasst Spritzblasen, Spritzgießen und Streckblasen, bei dem sogenannte Preforms oder Vorformlinge (nicht gezeigt)durch eine Druckbeaufschlagung mit einem Fluid, wie Druckluft, in der Blasform mit oder ohne eine Reckstange ausgeformt werden. Dem Spritzblasen geht eine Herstellung dieser Vorformlinge beispielsweise mittels Strangpressen oder Spritzgießen vorweg. Die nachfolgend beschriebenen Spritzblaseinheit betreffen den Blasvorgang als solchen, also das Aufblasen der Vorformlinge zu Hohlkörpern, wie Flaschen, Dosen oder Tiegeln in beliebiger Form und Größe. Die Vorformlinge haben oftmals die Form und Größe eines Reagenzglases und sind mit einem Schraubgewinde um ihre Mündung versehen. Sie bestehen aus einem thermoplastischen Material, beispielsweise PET oder ein anderer spritzblas- bzw. strangpressfähiger Kunststoff, wie PE, PA, PP, PC, PLA, SAN, TPU, Barex und PVC. Eine Wärmvorrichtung (nicht gezeigt) erwärmt, beispielsweise mittels Infrarotstrahlung, die auszudehnenden Bereiche der Vorformlinge auf eine Verarbeitungstemperatur, die über der Erweichungstemperatur des jeweiligen thermoplastischen Materials liegt. Die Spritzblaseinheit bläst und streckt dann in einem kombinierten Blas- und Streckprozess die Vorformlinge mittels eines unter Druck stehenden Fluides, üblicherweise Druckluft, und mittels einer Reckstange zu einem Hohlkörper.

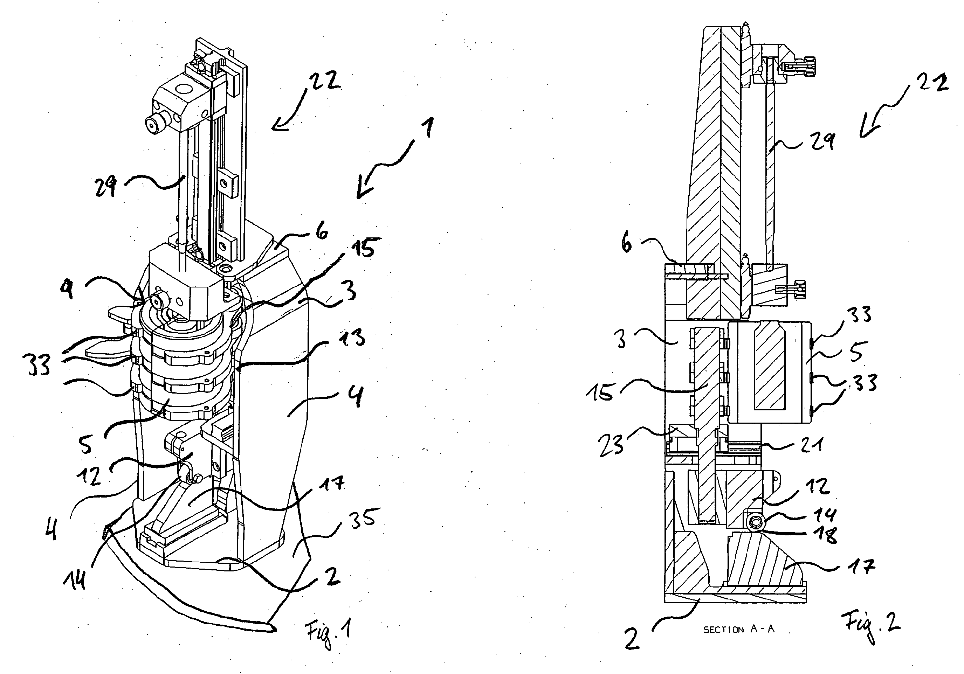

Die in den Fig. 1 bis 4 dargestellte Spritzblaseinheit 1 umfasst ein Maschinengestell 3, das im wesentlichen einen Maschinensockel 2, links und rechts außen darauf angeordnete Ständer 4 und eine die beiden Ständer 4 an deren oberen Ende miteinander verbindende Gestellplattform 6 zusammengesetzt ist. Diese vier Elemente sind, soweit möglich, aus einem Stück gefertigt, damit insbesondere die beiden Ständer 4 nach links und rechts außen wirkende Kräfte im Sinne eines Kräfteparallelogramms aufnehmen können (siehe unten). Innerhalb des Maschinengestells 3, also zwischen den beiden Ständern 4 und dem Maschinensockel 2 sowie der Gestellplattform 6, ist eine Blasform 9 aus zwei halbzylindrischen Formhälften 5 zusammen mit einem schalenförmigen Formboden 7 angeordnet. Die beiden Formhälften 5 sind über eine Verbindungswelle 15 miteinander gekoppelt und können um diese scharnierartig verschwenkt werden. Mehrere parallele, übereinander angeordnete Verstärkungsstreben 33 umschließen jeweils die beiden Formhälften 5 und lagern diese an der Verbindungswelle 15. Die Verstärkungsstreben 33 sind entweder fest mit der jeweiligen Formhälfte 5 verbunden, beispielsweise verschweißt, oder können alternativ einstückig mit den Formhälften 5 ausgebildet sein.

Ein Verstellmechanismus verstellt die beiden Formhälften 5 zusammen mit dem Formboden 7 zwischen einer Verriegelungs- und einer Öffnungsstellung. In der Öffnungsstellung sind die Formhälften 5 auseinandergeschwenkt, also an ihrem vorderen Ende voneinander beabstandet und befinden sich außerhalb des Maschinengestells 3. In der Verriegelungsstellung sind sie zwischen das Maschinengestell 3 eingefahren, das als Verriegelungseinrichtung wirkt und die beiden Formhälften 5 durch zwei an den beiden Ständern 4 definierten Abschnitten 13 zwischen sich einklemmt und damit eine Öffnung verhindert. In Fig. 1 befinden sich die Formhälften 5 in ihrer das Maschinengestell 3 eingefahrenen Verriegelungsstellung.

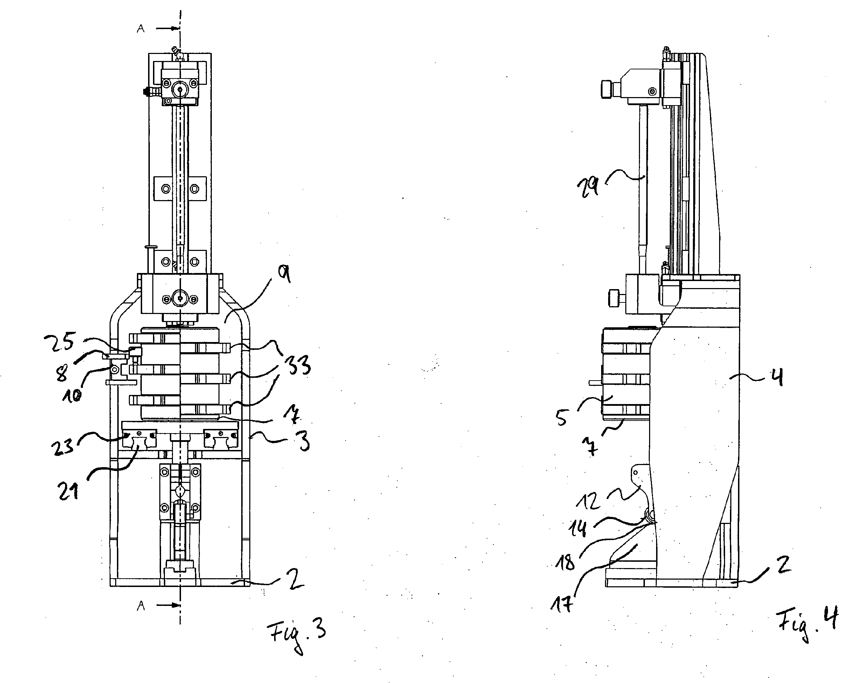

Wie in Fig. 2 und 3 ersichtlich, umfasst der Verstellmechanismus einen auf einer Führungsschiene 21 aufgesetzten Führungsschlitten 23, der von einer Antriebseinrichtung (nicht gezeigt), wie einem Elektromotor oder Hydraulikantrieb, in horizontaler Richtung vor und zurück angetrieben wird. Die Verbindungswelle 15 durchsetzt den Führungsschlitten 23 derart, dass die beiden Formhälften 5 dabei zusammen mit dem Führungsschlitten 23 entlang der Führungsschiene 21 in das Maschinengestell 3 ein- und aus diesem ausgefahren werden können.

An diametral gegenüberliegenden Positionen der beiden Formhälften 5 sind Führungsrollen 25 in deren Verstärkungstreben 33 vorgesehen, die an den beiden Innenwänden der Ständer 4 in Höhe des Verriegelungsabschnittes 18 in festem Kontakt mit diesen entlang rollen und dabei in jeder Innenwandposition eine Verriegelung der beiden Formhälften 5 sicherstellen. Von beiden Ständern 4 steht in Höhe einer der Verstärkungsstreben 33 ferner jeweils eine horizontal nach vorne verlaufende Führungskulisse 8 ab, in die jeweils ein an jeder Formhälfte 5 angebrachter, von deren zugehöriger Verstärkungsstrebe 33 nach unten ragender Führungsstift(nicht gezeigt) eingreift. Die beiden Führungskulissen 8 sind derart geformt, dass die beiden Formhälften 5 beim Ausfahren aus dem Maschinengestell 3 zur Entnahme des ausgeformten Behälters und zum Einsetzen eines weiteren Vorformlings nach außen aufgeschwenkt werden sowie beim Einfahren in das Maschinengestell 3 die Formhälften 5 vollständig schließen und die Führungsrollen 25 an den Verriegelungsabschnitt 13 zum Anliegen bringen.

Der Formboden 7 der Blasform 9 sitzt auf einem Wagen 12 auf (bzw. ist mit diesem einstückig verbunden), dessen einziges Rad 14 auf einer am Maschinensockel 2 befestigten Rampe 17 entlang fährt. Die Verbindungswelle 15 taucht vertikal in eine Wellenbohrung im Wagen 12 ein, in der sie in vertikaler Richtung auf und ab bewegt werden kann. Wenn die Antriebseinrichtung den Führungsschlitten 23 zusammen mit der Verbindungswelle 15 vor und zurück bewegt, wird auch der Wagen 12 von letzterer zwangsgekoppelt vor und zurück bewegt und läuft dabei auf der nach vorne abfallenden Schräge der Rampe 17 gleichzeitig von oben nach unten und umgekehrt. Der Formboden 7 vollführt die gleiche Bewegung wie der Wagen 12 und befindet sich daher in seiner Öffnungsstellung außerhalb des Maschinengestells 3 am unteren Bereich der Rampe 17 und in seiner Schließstellung innerhalb des Maschinengestells 3 am oberen Bereich Rampe 17. Die Rampe 17 umfasst an ihrem oberen Bereich einen im wesentlichen horizontalen Führungsabschnitt, entlang dem das Führungsrad 14 den Formboden 7 gegen die beiden Formhälften 5 drückt und die Blasform 9 somit insgesamt verriegelt. In den Fig. 1 bis 3 ist der Formboden 7 zu Darstellungszwecken vom Wagen 12 abgenommen.

Wie in Fig. 1 ersichtlich, ist auf der Gestellplattform 6 eine Blaseinheit 22, deren nicht weiter im Detail gezeigte Blasdüse an die Mündung eines in der Blasform 9 aufgenommenen Vorformlings gasdicht ansetzbar ist. Durch die Blaseinheit 22 ist eine in der Höhe verfahrbare Reckstange 29 fluiddicht geführt, die beim Blasen des Vorformlings kontinuierlich zur Unterstützung des Formvorganges in den Vorformling eingesenkt wird und dabei mit ihrer Spitze dessen Boden nach unten drückt. Über die Blasdüse wird gleichzeitig Druckluft in die Vorformlinge eingeblasen. Die Reckstange 29 wird von einem in den Figuren nicht näher dargestellten Zylinder angetrieben. Der Blasdruck wird derart gesteuert, dass der Vorformling zunächst bei einem geringeren Blasdruck im wesentlichen in Umfangsrichtung und aufgrund der Wirkung der Reckstange 29 gleichzeitig auch mechanisch in Längsrichtung solange aufgeblasen wird, bis er im wesentlichen an der Innenwand der Blasform 9 anliegt und anschließend bei einem höheren Druck an die Innenkontur der Blasform 9 fertig ausgeformt wird.

Alternativ kann der Vorformling auch nur mit einer einzigen Druckstufe ausgeblasen werden.

Der gesamte Blasvorgang in der oben beschriebenen Spritzblaseinheit 1 läuft damit wie folgt ab: Eine (nicht gezeigt) Zufuhrvorrichtung, beispielweise ein Greifarm oder ein Transportdorn, führt der Spritzblaseinheit 1 bei geöffneter Blasform 9 einen erwärmten Vorformling zu und setzt ihn in die Blasform 9 so ein, dass er an einem Gewindeabschnitt eines Deckelbereiches einer Formhälfte 5 über ein am Vorformling vorgeformtes Schraubgewinde aufgehängt ist. Diese Gewindefläche des Vorformlings wird oftmals durch einen in der Blaseinheit 22 vorgesehenen Kühlmechanismus vor hohen Temperaturen geschützt, um ein Verziehen seiner Gewindegänge zu vermeiden. Die Formhälften 5 nehmen den Vorformling somit zwischen sich auf und werden dann zusammen mit dem Formboden 7 mittels des oben beschriebenen Verstellmechanismus in das Maschinengestell 3 eingefahren und dabei dort zwischen dessen Verriegelungsabschnitt 18 verriegelt. Dann wird die Blaseinheit 22 fluiddicht auf der Gewindemündung des Vorformlings aufgesetzt und Luft in den Vorformling eingeblasen. Gleichzeitig wird die Reckstange 29 in Richtung Formboden 7 in die Blasform 9 abgesenkt. Nach dem fertigen Ausblasen wird die Druckluft aus dem Formkörper abgelassen, dabei ggf. teilweise in den Druckkreislauf rückgeführt und der erwärmte Formkörper vor Entnahme in der Blasform 9 abgekühlt. Dann fährt der Verstellmechanismus die Blasform 9 aus dem Maschinengestell 3 in deren Öffnungsstellung, wobei sich die beiden Formhälften 5 in einer Schwenkbewegung öffnen und der Formboden 7 sich nach unten absenkt. Der so freigelegte Formkörper kann dann mittels einer (nicht gezeigten) Entnahmevorrichtung oder manuell entnommen werden. Die fertigen Formkörper sind sofort einsatzbereit, beispielsweise zum Befüllen mit einer beliebigen Flüssigkeit.

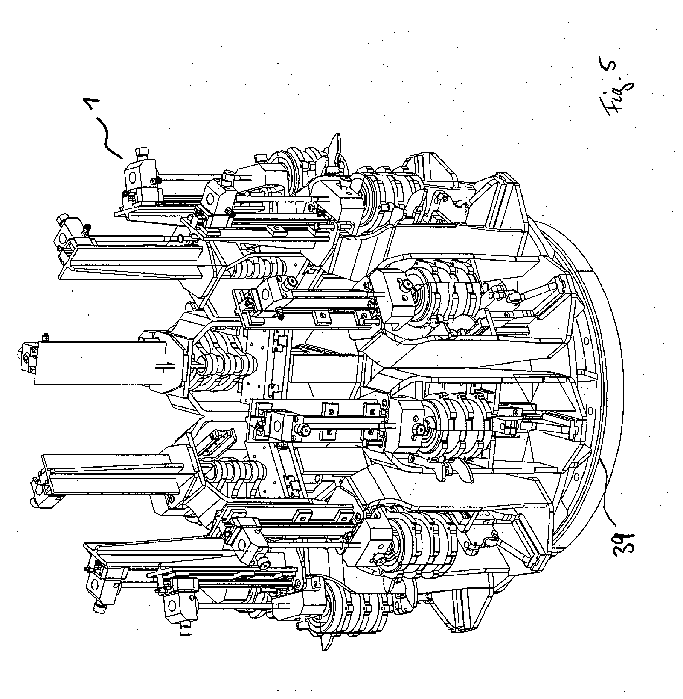

Fig. 5 zeigt in einer Schrägansicht mehrere in Umfangsrichtung auf einem rotierbaren Blasrad 35 angeordnete Streckblaseinheiten 1.

Neben der oben beschriebenen Ausführungsbeispielen sind weitere Ausgestaltungen und Variationen der vorliegenden Erfindung möglich, die sich für den Fachmann aus dem Rahmen der nachfolgenden Patentansprüche ergeben.

## Patentansprüche

1. Spritzblasvorrichtung zum Blasen von Hohlkörpern aus Vorformlingen mit einer Spritzblaseinheit (1), die folgendes umfasst:
ein Gestell (3),
eine Form (9), die zwischen einer Verriegelungs- und einer Öffnungsstellung verstellbare Formhälften (5) umfasst,
einen Verstellmechanismus (21, 23) zum Verstellen der Formhälften (5) zwischen der Verriegelungs- und der Öffnungsstellung, und
eine Verriegelungseinrichtung (18) zum Verriegeln der Formhälften (5) in Ihrer Verriegelungsstellung,
**dadurch gekennzeichnet, dass**
die Verriegelungseinrichtung (18) ein Abschnitt des Gestells (3) ist, der derart ausgebildet ist, dass er die von den beiden Formhälften (5) in ihrer Verriegelungsstellung beim Blasen ausgeübten Kräfte direkt aufnimmt.

2. Spritzblasvorrichtung nach Anspruch 1, bei der die beiden Formhälften (5) schwenkbar miteinander verbunden sind, und der Verstellmechanismus (21, 23) eine Schwenkung der Formhälften (5) zwischen deren Verriegelungs- und deren Öffnungsstellung bewirkt.

3. Spritzblasvorrichtung nach Anspruch 1 oder 2, bei der der Verstellmechanismus (21, 23) derart ausgestaltet ist, dass er die beiden Formhälften (5) beim Verstellen in deren Verriegelungsstellung in den Abschnitt des Gestells (3) einfährt und beim Verstellen in deren Öffnungsstellung aus dem Abschnitt des Gestells (3) ausfährt.

4. Spritzblasvorrichtung nach Anspruch 2 und 3, bei der der Verstellmechanismus (21, 23) derart ausgestaltet ist, dass er beim Einfahren der Formhälften (5) in den Abschnitt des Gestells (3) diese gleichzeitig in deren Verriegelungsstellung einschwenkt und beim Ausfahren aus dem Abschnitt des Gestells (3) gleichzeitig in deren Öffnungsstellung ausschwenkt.

5. Spritzblasvorrichtung nach Anspruch 4, bei der der Verstellmechanismus (21, 23) eine Kulissenführung (8, 10) umfasst, die das Ein- und Ausfahren der Formhälften (5) mit deren Ein- und Ausschwenken koppelt.

6. Spritzblasvorrichtung nach einem der vorhergehenden Ansprüche, bei der der Abschnitt des Gestells (3) der Verriegelungseinrichtung (19) als Kräfteparallelogramm ausgebildet ist, an dessen zwei gegenüberliegenden Seiten (4) die Formhälften (5) in ihrer Verriegelungsstellung anliegen.

7. Spritzblasvorrichtung nach einem der vorhergehenden Ansprüche, bei der die Verriegelungseinrichtung (19) an den Formhälften (5) und/oder dem Abschnitt des Gestells (3) angebrachte Gleitmittel, insbesondere Rollen (20) umfasst.

8. Spritzblasvorrichtung nach Anspruch 7, bei der die Gleitmittel an Verstärkungsrippen (33) angebracht sind, die mit den Formhälften (5) insbesondere einstückig verbunden sind.

9. Spritzblasvorrichtung nach einem der vorhergehenden Ansprüche, bei der die Form (9) ferner einen zwischen der Verriegelungs- und der Öffnungsstellung verstellbaren Formboden (7) umfasst.

10. Spritzblasvorrichtung nach Anspruch 9, bei der der Verstellmechanismus (21, 23) derart ausgestaltet ist, dass er den Formboden (7) gekoppelt mit den beiden Formhälften (5) beim Verstellen in dessen Verriegelungsstellung in den Abschnitt des Gestells (3) einfährt und beim Verstellen in dessen Öffnungsstellung aus dem Abschnitt des Gestells (3) ausfährt.

11. Spritzblasvorrichtung nach Anspruch 10, bei der der Verstellmechanismus (21, 23) die beiden Formhälften (5) und den Formboden (7) über eine verlängerte Verbindungswelle (15) miteinander koppelt.

12. Spritzblasvorrichtung nach einem der Ansprüche 9 bis 11, bei der der Verstellmechanismus (21, 23) eine mit dem Gestell (3) verbundene Rampe (17) zum Führen des Formbodens (7) von dessen Öffnungs- in dessen Verriegelungsstellung umfasst, und die Verriegelungseinrichtung einen in der Rampe (17) ausgebildeten Verriegelungsabschnitt (18) umfasst.

13. Spritzblasvorrichtung nach Anspruch 12, bei der der Formboden (7) wenigstens ein mit der Rampe (17) in Eingriff stehendes Gleitmittel, insbesondere eine Führungsrolle (25) umfasst, die den Formboden (7) auf der Rampe (17) führt.

14. Spritzblasvorrichtung nach Anspruch 12, die zum Blasen von kleinvolumigen Hohlkörpern, insbesondere Behältern bis maximal 250 ml Füllvolumen ausgestaltet ist.

15. Spritzblasvorrichtung nach einem der vorhergehenden Ansprüche, die mehrere Spritzblaseinheiten (1) umfasst, die an der Peripherie eines Blasrades (35) angeordnet sind.
